# EUROPEAN PATENT SPECIFICATION

(11) **EP 2 137 092 B1**
(45) Date of publication and mention of the grant of the patent: **10.06.2015**
(21) Application number: 07747985.5
(22) Date of filing: 04.04.2007
(51) Int. Cl.: F16G 15/04, B66C 1/12, B66C 15/00, F16G 13/12

(54) **LIFTING SLING SYSTEM**
HUBSCHLINGENSYSTEM
SYSTÈME D'ÉLINGUE DE LEVAGE

(43) Date of publication of application: 30.12.2009
(73) Proprietor: Frenolink Förvaltnings AB, 184 92 Akersberga (SE)
(72) Inventor: FREDRIKSSON, Lars, S-184 92 Åkersberga (SE)
(74) Representative: Ehrner & Delmar Patentbyrå AB
(86) International application number: PCT/SE2007/000319
(87) International publication number: WO 2008/123803

(56) References cited:
- EP-A2- 1 136 419
- WO-A1-2007/040430

## Description

### Field of the invention

The invention relates to a lifting sling system for connecting various loads to a lifting hook of a lifting apparatus according to the preamble of claim 1. Such a system is disclosed in, e.g., EP1136419.

### Prior art

WO 2007/040430 A1 is a prior art document under Article 54(3)EPC.

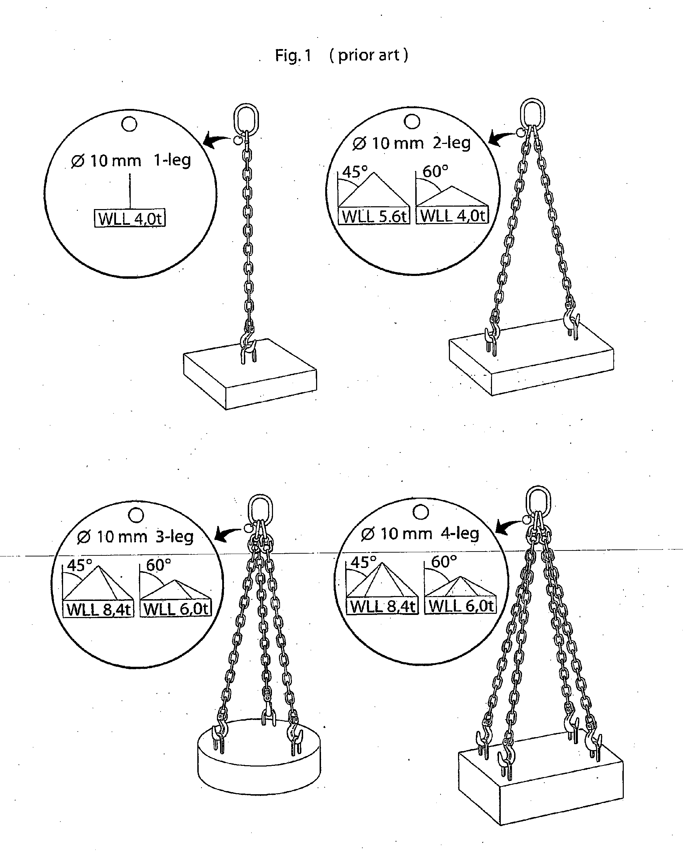

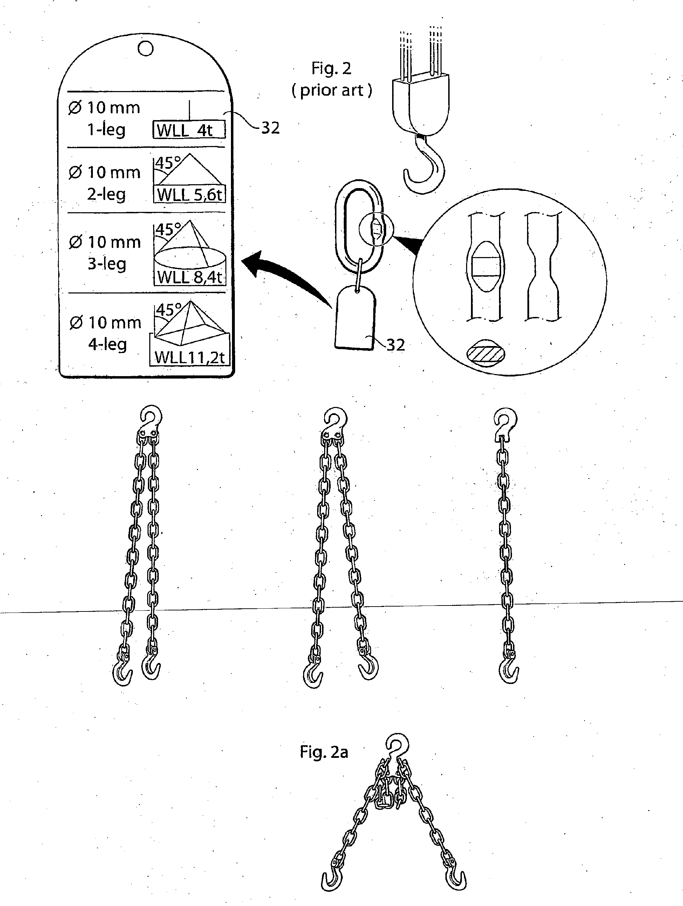

Two examples of prior art system are illustrated in figures 1 and 2, respectively. Each lifting sling unit, having pre-assembled inseparable parts, comprises a head link or master link, a coupling member for each leg portion, a number of interconnected chain links for each leg, these legs having normally the same length (although the length may be individually adjustable), and a sling hook or some other fitting as a lower terminal or connector for each leg portion. The assembly of each lifting sling unit is made by an authorized person with the required competence in an assembly workshop ("sling ship") where special assembly tools are used for making the sling as an integral unit with inseparable parts. These parts are not supposed to be taken apart in operation at a lifting site, except for possible inspection by an authorized person.

The lifting capacity of each sling unit, normally called the Working Load Limit (WLL), is based on the chain dimension, the number of legs which are all assumed to carry an equal part of the load and the angle of each leg to the vertical, and is indicated on a metal sling tag, which is attached, preferably permanently and securely, to the master link or elsewhere at the top of each lifting sling unit. In general, in the prior art system shown in fig. 1, when there are different loads to be handled, e.g. with mobile cranes, every crane needs to be equipped with a number of separate lifting sling units containing one, two, three and four legs, respectively. Hereby, a proper and secure lifting can be achieved for different kinds of loads.

For multi-leg lifting sling units, there are different methods of rating and presenting the working load limit (WLL). Table 2A (below) illustrates the rating for a special use, where all legs carry an equal load, and the legs have an angle of 45° to the vertical:

**Table 2A - special use**

| Chain size (mm) | WLL (t) 1-leg | WLL (t) 2-leg*) | WLL (t) 3-leg*) | WLL (t) 4-leg*)**) |
|---|---|---|---|---|
| 6 | 1.5 | 2.1 | 3.1 | 4.2 |
| 8 | 2.5 | 3.5 | 5.2 | 7.0 |
| 10 | 4.0 | 5.6 | 8.4 | 11.2 |
| 13 | 6.5 | 9.1 | 13.6 | 18.2 |
| 16 | 10 | 14 | 21 | 28 |
| 20 | 16 | 22 | 33 | 44 |

| | | | | |
|---|---|---|---|---|
| *) WLL for 2-, 3- and 4-leg are given for a leg angle of 45° to the vertical. **) WLL for four legs apply provided that special measures have been taken so that each leg will carry an equal share of the load. Otherwise WLL for three legs will apply. | | | | |

Thus, all legs should carry an equal load, also for four-leg sling units. Special measures are required to make sure that the legs in a four-leg sling do in fact carry an equal load. The leg angle to the vertical can be selected to any reasonable value, but in this particular example, the WLL is based on an angle of 45°.

In table 2B, below, there is shown the rating for general use, where all legs should carry an equal load for sling units width two and three legs, respectively:

**Table 2B - general use**

| Chain size (mm) | WLL (t) 1-leg | WLL (t) 2-leg, 45° | WLL (t) 2-leg 60° | WLL (t) 3+4-leg 45° | WLL (t) 3+4-leg 60° |
|---|---|---|---|---|---|
| 6 | 1.5 | 2.1 | 1.5 | 3.1 | 2.2 |
| 8 | 2.5 | 3.5 | 2.5 | 5.2 | 3.7 |
| 10 | 4.0 | 5.6 | 4.0 | 8.4 | 6.0 |
| 13 | 6.5 | 9.1 | 6.5 | 13.6 | 9.7 |
| 16 | 10 | 14 | 10 | 21 | 15 |
| 20 | 16 | 22 | 16 | 33 | 24 |

On the other hand, for four-leg sling units, only three legs are considered to carry the load, because no special measures are taken for equal distribution of the load. Also, in this example, WLL is indicated for two angles to the vertical, viz. 45° and 60°, respectively.

As an alternative (not shown), the WLL can be rated based on the leg angle to the horizontal (rather than the vertical).

Another rating principle for general use is a reduction of WLL based on the consideration that only two legs may carry the load for three-leg and four-leg sling units.

Further alternative rating principles for general use are to indicate WLL for three angles, namely 30, 45 and 60 degrees respectively, or to indicate WLL for two other angles, namely 30 and 45 degrees.

### Risks and inefficiencies in prior art systems

Long term experience from lifting sling systems of the kind described above have shown some safety risks as well as inefficiencies in respect of practical operation and costs.

The lifting sling units for big size chains with units having three or four legs are very heavy to handle manually, especially when coupling such a sling unit to a lifting hook. Table III, below, indicates the typical weight, for different chain sizes, of a lifting sling unit including a master link, joining members and the various chain legs, each having a length of about 1.5 m. These weights have to be lifted manually at the lifting site.

**Table 3 - weight of lifting sling units with four legs**

| Chain size (mm) | Weight (kg) |
|---|---|
| 13 mm | 40 kg |
| 16 mm | 60 kg |
| 20 mm | 93 kg |

By having separate slings for all different numbers of legs there are obvious disadvantages, like:
- heavy manual handling of large multi-leg slings,
- WLL information is not correct, when not all legs in a sling are connected, or when several separate slings are joined together for a common multi-leg lift,
- idle sling legs are dangerous.

An alternative to having lifting sling units with three or four legs, is to compose a sling system with a number of lifting sling units, all including the same size sling legs and each having only one or two legs, in various permissible combinations, which is also previously known (see fig.2). Then, there will be a lack of utilization efficiency of the crane, as the lifting capacity of the sling system will vary very much depending on the permissible combinations of lifting sling units connected to the load. For a 1-leg permissible combination, the WLL is only approximately one third of the WLL for a 4-leg permissible combination (in fig. 2 there is illustrated a system with sling size n = 10 mm). Consequently, a 1-leg lift can only utilize one third of the lifting capacity of the crane, unless the sling system will be correspondingly oversized for a 4-leg permissible combination. For a 2-leg permissible combination, the WLL is 0,5-0,7 of the WLL for a 4-leg permissible combination, resulting in the same problems as for a 1-leg sling unit but to a slightly lesser extent. The exact ratios of WLL between 4-leg, 3-leg, 2-leg and 1-leg permissible combinations will vary depending on the type of rating system applied, there being quite a large number of such rating systems.

A typical break-down of the total number of lifting operations with lifting sling systems having different numbers of sling leg units over a longer period of time is the following: 40% 1-leg, 50% 2-leg and 10% 3-leg and 4-leg.

Also, the lifting capacity utilization of a crane for all lifting operations over a longer period of time in general lifting service is topically spread as follows: 50% of loads lifted are at the most 0,5 x crane lifting capacity, 80% are at the most 0,75 x crane lifting capacity, and the rest, only about 20%, correspond to full crane lifting capacity or even exceed that capacity (= overload).

As a result of high proportions of lifts made with 1-leg and 2-leg slings, in combination with the WLL requirements, the sling system according to fig. 2 will not utilize the crane to its full extent. So, the only option is to select a sling system, which is much heavier, more costly and unnecessarily oversized for 2-, 3- and 4-legs in relation to the lifting capacity of the crane. Such heavy weights of the lifting sling units themselves will of course involve a safety risk for those who manually handle these units.

Moreover, it frequently happens that a particular lifting sling unit, intended for use with all leg portions being active, is fitted to the load with a lower number of legs. Then, the partial load taken up by each active leg will be substantially higher than the intended one, the latter being based on the Working Load Limit (WLL) and being indicated on the associated sling tag. In such a case, the actual load on each sling leg portion is higher than intended. Consequently, there will be a risk of overloading even if the operator observes the working load limits (WLL) indicated on the sling tag. As an example, in table 2A above, the working load limit for a three leg chain sling unit of chain size 10 mm is 8.4 tons. However, in case only two legs are used for lifting and one leg portion is idle, the actual maximum load should be 5.6 tons, a value which does not appear on the sling tag being used in the prior art systems. Clearly, this involves a risk of overload.

Another risk involved in using multileg lifting sling units, where some of the leg portions are hanging idle during the lifting operation, is that the remaining legs will be allowed to swing around in the air without control, thereby possibly hitting people in their heads or being inadvertently caught by other objects, buildings or the like. Of course, this will bring about a serious risk for accidents and personal injuries during the lifting operation.

As a matter of economy and efficiency, it is desirable to keep down the weight of the lifting sling equipment, especially for mobile cranes and cranes mounted on lorries and the like, thereby saving fuel and increasing the active transportation capacity. From this point of view, there is a need for higher flexibility and a minimum amount of equipment. In the prior art example illustrated in Figure 1, there are four different lifting sling units having one, two, three and four leg portions, respectively, depending on the type of load to be lifted. All in all, this adds up to 1+2+3+4 = 10 chain leg portions and four master links, one for each lifting sling unit, as appears from figure 1.

Moreover, when combining a number of lifting sling units each having only one or two sling legs, the sling tags will not indicate the correct, total working load limit, but a smaller one (e.g. 5.6 tons instead of 8.4 tons), which is clearly inefficient and misleading.

### Object of the invention

With this background, a primary object of the present invention is to provide a lifting sling system, which can better match the lifting capacity of the crane, or other lifting machinery, for any selected number, normally 1 up to 4, of sling legs in the lifting sling system.

Another object of the invention is to take into consideration the frequency of sling leg numbers actually applied as well as the extent of utilization of the lifting capacity of the crane, i.e. frequency of load lifts with full capacity and different factors of reduced capacity.

A further object of the invention is to use the least possible lifting sling equipment for the required lifting duty, making the sling system lighter in handling and more cost efficient.

A still further object of the invention is to provide unitary and unambiguous WLL data on an information carrier system, covering virtually all permissible sling combinations.

### Summary of the invention

According to the present invention, the above stated objects are met for a lifting sling system stated in claim 1.

Various advantageous embodiments, with more specific features concerning the permissible sling unit combinations, are stated in claims 2-9.

The various lifting sling units are adapted for selective coupling of a particular load to the lifting hook in accordance with information provided on an information carrier, such as a sling tag, being permanently attached to the lifting sling system. Possibly, the lifting sling system also includes. at least one further information carrier as a free component containing the same information as the one which is permanently attached to a member forming a part of the lifting sling system.

In this way, the number of different lifting sling units will be kept to a minimum, and each lifting sling unit will be relatively light in weight and easy to handle.

By way of the present invention, it will be ensured that the indicated working load limits will not be exceeded in practice, and also that the capacity of the lifting apparatus and the lifting sling units can be used in an optimal way.

Further advantages and features of the invention will be apparent from the detailed description below, reference being made to the accompanying drawings.

### Brief description of the drawings

Figures 1 and 2 illustrate schematically prior art lifting sling systems including lifting sling units with different numbers of sling legs in each lifting sling unit;
Figure 3 illustrates schematically an embodiment of a lifting sling system according to the present invention, with three different sling sizes;
Figs. 4a, 4b and 4c show various head-links and sub-links being used in the sling units;
Figs 5a, 5b, 5c and 5d show various coupling hooks to be used together with head-links or the sub-links shown in figs. 4a, 4b and 4c.
Figure 6 illustrates, likewise very schematically, two different sling tags to be used for a lifting sling system including units of three different sling sizes;
Figs. 7a and 7b show two diagrams illustrating the performance of the prior.art lifting sling systems; and
Fig. 8 shows a corresponding diagram for a lifting sling system according to the present invention.

### Detailed description of preferred embodiments

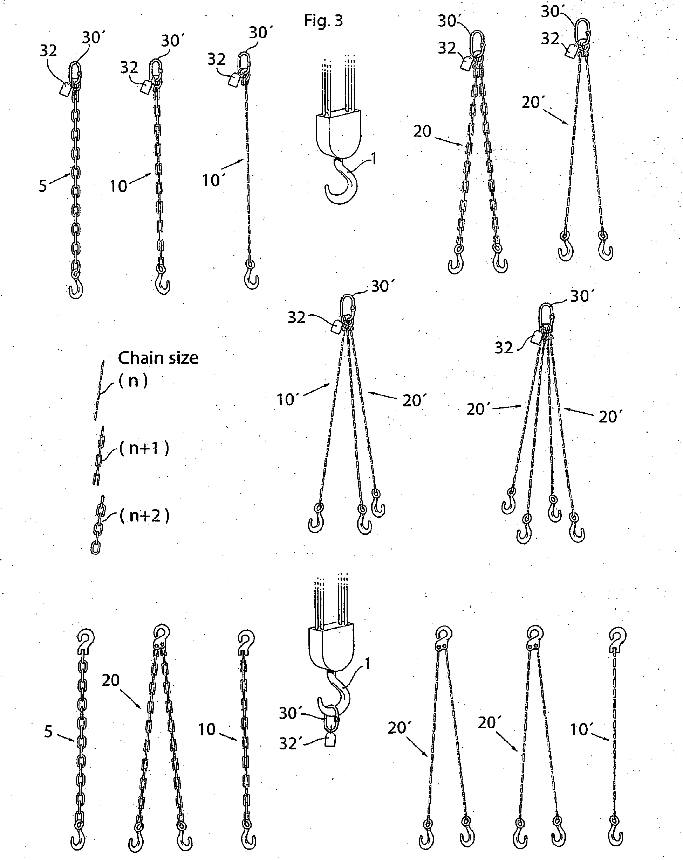

In figure 3, there is shown a lifting sling system according to the present invention, having as an example altogether six lifting sling units as shown at the lower part of the figure. These sling units have three different chain sizes, including a single leg lifting sling unit 5 of a largest size (n + 2), a dual leg lifting sling unit 20 and another, single leg lifting sling unit 10 of a next smaller size (n + 1), and three sling units 10',20' of a smallest size (n), e.g. with n + 2 = 13 mm, n + 1 = 10 mm and n = 8 mm. The units of the smallest size n include two dual leg lifting sling units 20' and one single leg lifting sling unit 10'.

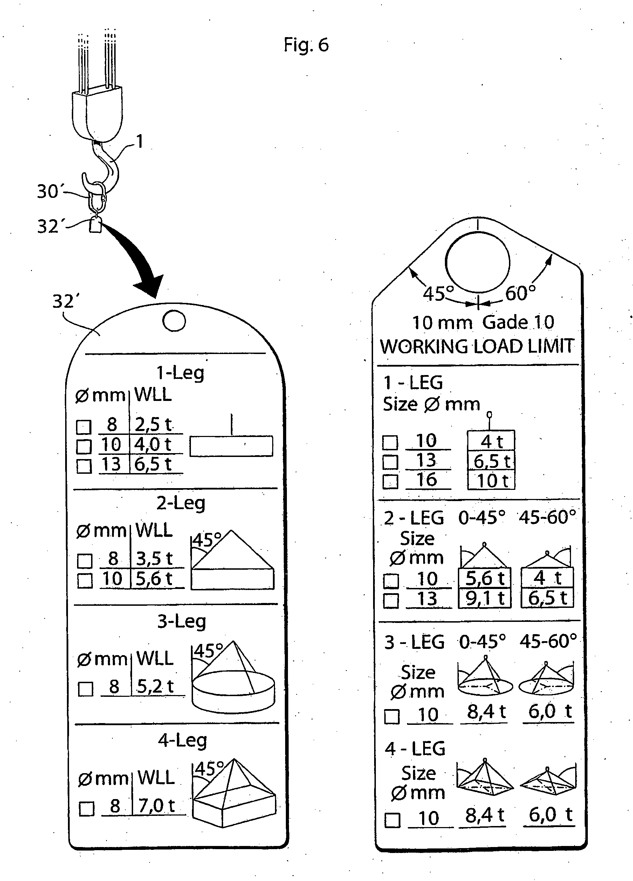

With such differentiation of the chain sizes among the single leg and dual leg lifting sling units, it is possible to establish seven permissible sling unit combinations and to carry approximately the same total load (close to 6 tons) with one, two, three or four sling legs, as clearly indicated on the sling tag 32 to the left in figure 6.

The seven sling unit combinations indicated on the sling tag 32 are shown in the upper part of figure 3. Of course, the selection of a particular sling unit combination depends on the size and shape of the load (not shown). In this way, it is possible to utilise the maximum load capacity of the lifting apparatus with the crane hook 1, for various sling load combinations being adapted to different loads having different configurations and requiring different numbers of sling legs (1-, 2-, 3- and 4-leg sling unit combinations).

With a lifting sling system as illustrated in figure 3, it is also possible to make more efficient use of the whole range of the crane load capacity, by using various sling unit combinations having substantially different work load limits. Compare table 2A above. In particular, for loads configured for lifting with only one sling leg, it is in this example possible to choose between three sling units 5, 10 and 10', for loads weighing up to 2.5 tons, 4.0 tons and 6.5 tons, respectively.

It will be apparent that the total number of sling legs, and the total weight of the lifting sling system according to the invention, is substantially reduced in comparison to the prior art systems described above.

Still, the safety is increased, since the user will have a clear indication of the permissible sling unit combinations on the sling tag being an integral part of the system, irrespective of the particular sling unit combination being used.

Furthermore, of course, the weight of each lifting sling unit 5, 10, 20, 10' or 20' to be handled is much less that the prior art combinations involving three or four sling legs.

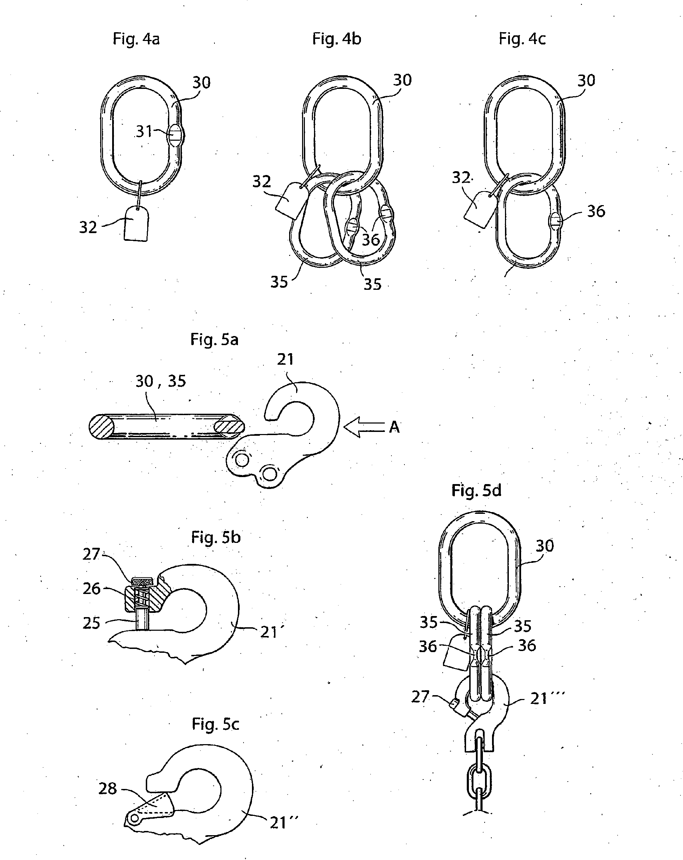

For increased safety (see figs. 4a, 4b, 4c and figs. 5a, 5b, 5c, 5d), the quick coupling of a particular lifting sling unit may be achieved by means of a flattened head-link 30 or sub-link 35 in combination with a coupling hook member 21 having a narrow gap fitting snugly onto the flattened portion 36 of the head-link or sub-link, or by way of coupling hook member 21', 21", 21'" having a gap accommodating the full cross-sectional diameter of a head-link or a sub-link but being provided with a locking member 27 or 28 (figures 5b, 5c and 5d). As shown in fig. 5d, when a lifting sling unit with a large sling dimension is used, the coupling hook member 21'" should have a wide enough inner gap to accommodate two sub-links 35 in parallel.

Instead of chains, it would be possible to use wire ropes or fibre slings, such as fibre round slings or fibre webbing belts, for the sling legs of each lifting sling unit. Of course, the quick-coupling members may be constituted by other members than hooks. Also, the terminal ends of each sling leg may be attached to other kinds of connectors or coupling members for secure attachment to a particular load.

The lifting sling system may include one or more additional sling tags or information carriers which constitute freely movable components and containing substantially the same information as the information given on the information carriers being permanently attached to one or several members forming integral parts of the lifting sling system.

All permissible sling unit combinations are included on the information carrier, for instance three different sizes of single leg lifting sling units with corresponding WLL values for 1-leg lifting, and two different sizes of double leg lifting sling units with corresponding WLL values for 2-leg lifting. Thereby, for lifting light loads, a correspondingly lighter and slimmer permissible sling unit combination can be used, there being three sizes to choose from for a 1-leg lift and two sizes to choose from for a 2-leg lift. The head-link assemblies are all designed for a lifting capacity to meet the highest WLL for 1-leg size n + 2, 2-leg size n + 1 and 3- and 4-leg for size n.

This will give a maximum WLL utilization of the crane, while the handling efficiency with lighter and smaller slings can be utilized for lower WLL with lighter loads, and this can be achieved without adding any extra lifting sling units. E.g. the single sling unit for size n can be used in permissible sling unit combinations with 3-legs or only 1-leg. A "combination" can include only one lifting sling unit, or two or more lifting sling units. The relevant information is added on the information carrier to make it a permissible sling unit combination.

In fact, there are a great number of permissible combinations of lifting sling units that can be made between the different sizes based on max 4-leg for size n, max 2-leg for size n+1 and max 1-leg for size n+2. This is illustrated in table ABC below, where any one combination from each size, n, n+1 and n+2 can be selected and combined together to form a lifting sling system adapted to meet the user requirement with a minimum of equipment. In the columns with the required sling leg numbers the sling leg savings for each size combination can be read and added together for the selected system.

Likewise, the saving of the required number of head-link assemblies is indicated in the relevant column.

The example shown in fig. 3 has the following combinations: D+D+S for size n, D+S for size n+1 and S for size n+2. Saved sling leg numbers are 5+0+0=5 sling legs. Saved number of head-link assemblies is (considering one head-link assembly needed for the system) 4+2+1-1 = 6 pieces.

**Table ABC**

| Size | Sling Units D=dual S= single | Permissible combination and WLL on information carrier | | | | Permissible headlink assemblies H= head-link 1 piece HS= H+1 sub-link HSS=H+2 sub-links | | | Number of sling legs | | | Number of head-link assemblies | | |
|---|---|---|---|---|---|---|---|---|---|---|---|---|---|---|
| | | 1 leg | 2 leg | 3 leg | 4 leg | H | HS | HSS | New | Old | Saving | New | Old | Saving |
| n | D+D+S | x | x | x | x | x | x | x a) | 5 | 10 | 5 | | 4 | 3 |
| | D+D | | x | | x | x | x | x a) | 4 | 6 | 2 | | 2 | 1 |
| | D+S | x | x | x | | x | x | x a) | 3 | 6 | 3 | | 3 | 2 |
| | S+S+S+S | x | x | x | x | x b) | x b) | x a) | 4 | 10 | 6 | | 4 | 3 |
| | S+S+S | x | x | x | | x by | x b) | x a) | 3 | 6 | 3 | | 3 | 2 |
| | S+S | x | x | | | x | x | x | 2 | 3 | 1 | | 2 | 1 |
| | 0 | | | | | | | | | | | | | |
| | | | | | | | | | | | | 1 e) | | |
| n+1 | D+S | x | x | | | x | x | | 3 | 3 | | | 2 | 1 |
| | D | | x | | | x | x | | 2 | 2 | - | | 1 | - |
| | S+S | x | x | | | x | x | x c) | 2 | 3 | - | | 2 | 1 |
| | S | x | | | | x | x | x | 1 | 1 | - | | 1 | - |
| | 0 | | | | | | | | | | | | | |
| | | | | | | | | | | | | | | |
| n+2 | S | x | | | | x | x | x d) | 1 | 1 | - | | 1 | - |
| | 0 | | | | | | | | | | | | | |
| | | | | | | | | | | | | | | |
| TOTAL | | | | | | | | | | | | | | |

a) Only up to two sling legs shall be attached to each sub-link as a permissible connection.
b) More than two coupling members connected to one head-link or sub-link is not permissible unless an equal horizontal level for bottom connectors is not required for the safe use of the application.
c) Only one sling leg (at most) connected to each sub-link is permissible.
d) The coupling member must be engaged over both sub-links working in parallel to equally carry the load.
e) The whole lifting sling system with one selection from each chain size (e.g. n, n+1, n+2) requires only one head-link assembly.

In fig. 6 there is shown, to the right, an information carrier for a system similar to the one shown in fig. 3, in three different sling sizes being larger than those in the previous example (10, 13 and 16 mm), which is applicable for lifting slings in general use, i.e. for 4-leg lifting sling units having the same WLL as for 3-leg lifting sling units, since no special measures have been taken for equal distribution of the load to each of the four sling legs. Furthermore there is for each position a tic-box to mark appropriate sling leg numbers and WLL based on permissible sling unit combinations for the particular lifting system of which the information carrier is a part (also applicable to the information carrier to the left in fig. 6).

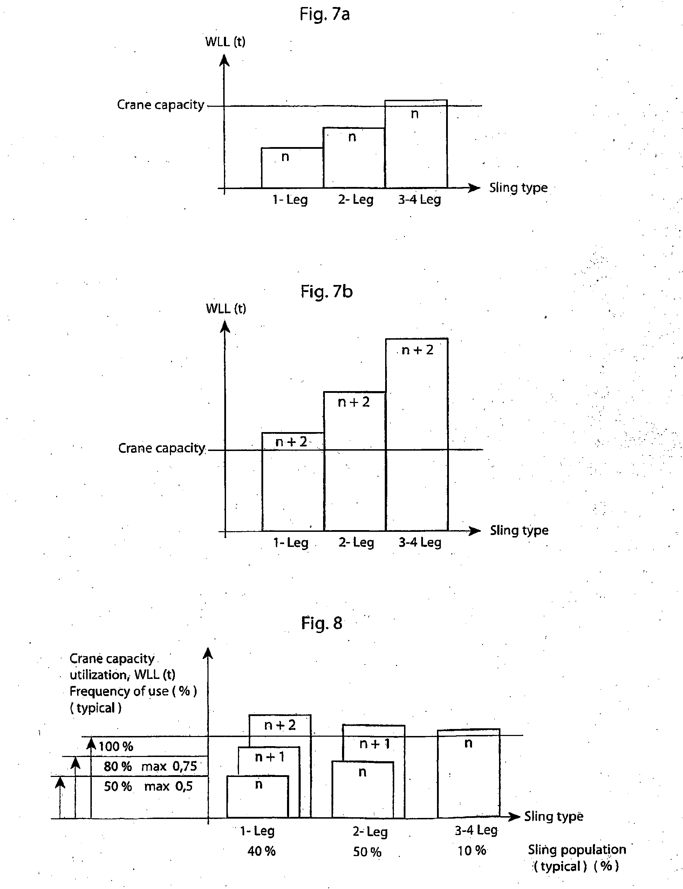

Fig. 7a shows a diagram for a prior art system of the kind shown in fig. 2, with a WLL rating for general use according to table 2B above. It is clear that for 1-leg and 2-leg sling unit combinations, the crane capacity cannot be fully utilised.

Fig. 7b shows a corresponding diagram, with the sling system two sizes up. The crane will be fully utilized, but the 2-leg, 3-leg and 4-leg sling unit combinations are all clearly oversized for the required duty.

Fig. 8 shows a corresponding diagram for a sling system according to the present invention, e.g. as shown in fig. 3, with the WLL rating for general use according to table 2B above. It is also shown typical proportional populations of 1-leg, 2-leg and 3&4-leg sling unit combinations in use as well as typical frequency values of crane lifting capacity utilization. It can be concluded that for certain permissible sling unit combinations having 1 leg, 2 legs and 3&4 legs, the crane lifting capacity can be fully utilized.

Thus, a lifting sling system according to the present invention provides for maximum WLL utilization of the lifting apparatus or crane, while the handling efficiency with lighter and smaller slings can also be utilized for lower WLL with lighter loads, and the required slinging equipment is reduced to a minimum. Consequently, as compared to prior art systems, the total number of lifting sling units and associated components are kept to a minimum.

As will be clear to those skilled in the art, the lifting apparatus can be of different kinds, including cranes with a horizontal arm, along which a suspended lifting hook is displaceable radially from a base of the crane. Here, the maximum load capacity will depend on the location of the hook in relation to base of the crane.

## Claims

1. A lifting sling system for connecting various loads to a lifting hook (1) of a lifting apparatus, comprising
- a head-link (30),
- a set of lifting sling units each consisting of a number of inseparable parts including a coupling member, to be coupled to said lifting hook by means of said head-link (30), at least one and at most two sling legs, and a connector at the end of each sling leg, said lifting sling units being combinable and adapted for selective coupling of a particular load to said lifting hook in accordance with information provided on an information carrier (32) being attached to the head-link of the lifting sling system, there being a limited number of permissible sling unit combinations, including one or more lifting sling units having altogether at least one sling leg and at most four sling legs,
- whereby the load range and the maximum lifting capacity of the lifting apparatus can be fully utilized, irrespective of the particular weights and configurations of the various possible loads
**characterized in that**
- said limited number of permissible sling unit combinations includes sling units having at least two different sling leg dimensions (n, n + 1, etc.) and comprises
- at least two permissible sling unit combinations having the same number of sling legs (1-leg, 2-leg) but different sling leg dimensions and substantially different work load limits (WLL), so as to enable adaptation to a wide range of possible working loads, and also
- at least two permissible sling unit combinations having substantially the same work load limit (WLL) but different numbers of sling legs (1-leg, 2-leg, 3-leg, 4-leg) and different sling leg dimensions (n, n + 1, etc.), so as to enable adaptation to different loads of similar weight but each requiring a specific number of sling legs (1-leg, 2-leg, 3-leg or 4-leg).

2. The lifting sling system defined in claim 1, wherein all the permissible sling unit combinations are indicated on said information carrier (32).

3. The lifting sling system defined in claim 1, wherein said at least two permissible sling unit combinations having substantially the same work load limit (WLL) have work load limits, of which one is at the most 25% smaller than the other.

4. The lifting sling system defined in claim 1, wherein said limited number of permissible sling unit combinations includes combinations with a total of at least two and at most four different sling dimensions: n, n + 1, n + 2, n + 3; with at least one and at most four legs in the permissible sling unit combinations for dimension n; with possibly zero and at most four sling legs in the permissible sling unit combinations for dimension n + 1; with possibly zero and at most two sling legs in the permissible sling unit combinations for dimension n+2, and with possibly zero and at most one sling leg in the permissible sling unit combination for dimension n + 3.

5. The lifting sling system defined in claim 4, wherein said limited number of permissible sling unit combinations includes, combinations with at most three different sling dimensions: n, n + 1, n + 2; with at most four legs in the permissible sling unit combinations for dimension n; with at most three legs in the permissible sling unit combinations for dimension n + 1; and with possibly one leg for the permissible sling unit combination for dimension n + 2.

6. The lifting sling system defined in claim 5, wherein said limited number of permissible sling unit combinations includes combinations with three different sling dimensions: n, n + 1, n + 2; with one, two, three or four sling legs in the permissible sling unit combinations for dimension n; with one or two sling legs in the permissible sling unit combinations for dimension n + 1; and with one sling leg for dimension n + 2.

7. The lifting sling system as defined in claim 1, wherein said set of combinable lifting sling units include at least one of the following:
- a first number of dual lifting sling units (D) each consisting of pre-assembled members being permanently connected to each other, and
- a second number of single lifting sling units (S) also consisting of pre-assembled members being permanently connected to each other,
- said dual and/or single lifting sling units being quick-connectable to said lifting hook at the lifting site, and
- wherein said permissible sling unit combinations include sling unit combinations having at least two and no more than four different sling leg dimensions (n, n + 1, n + 2, n + 3),
- said first number of dual lifting sling units (D) with the same sling leg dimension being no more than two and said second number of single lifting sling units (S) with the same sling leg dimension being no more than four.

8. The lifting sling system defined in claim 1, wherein said attached information carrier indicates said permissible sling unit combinations, with the various numbers of sling legs, the various sling leg dimensions and the associated work load limits (WLL), possibly also for different rating systems, including said at least two permissible sling unit combinations having different work load limits but the same number of sling legs as well as said at least two permissible sling unit combinations having different numbers of sling legs but substantially the same work load limit.

9. The lifting sling system defined in claim 8, wherein the lifting sling system also includes at least one further information carrier as a free component containing the same information as the one which is attached to a member forming a part of the lifting sling system.

## Patentansprüche

1. Hubschlingensystem zum Verbinden verschiedener Lasten mit einem Hubhaken (1) einer Hubvorrichtung, umfassend:
- einen Kopfanschluss (30),
- einen Satz Hubschlingeneinheiten, die jeweils aus einer Anzahl von untrennbaren Teilen bestehen, die ein Kupplungselement aufweisen, das über den Kopfanschluss (30) mit dem Hubhaken gekoppelt werden soll, mindestens eines und höchstens zwei Schlingenbeine und ein Verbindungselement am Ende jedes Schlingenbeins, wobei die Hubschlingeneinheiten kombiniert werden können und zum selektiven Koppeln einer bestimmten Last mit dem Hubhaken gemäß den Informationen ausgelegt sind, die von einem Informationsträger (32), der an dem Kopfanschluss des Hubschlingensystems befestigt ist, bereitgestellt werden, wobei eine begrenzte Anzahl von zulässigen Schlingeneinheitkombinationen vorliegt, die eine oder mehrere Hubschlingeneinheiten, die insgesamt mindestens ein Schlingenbein und höchstens vier Schlingenbeine aufweisen,
- wobei der Belastungsbereich und die maximale Hubkapazität der Hubvorrichtung vollständig genutzt werden können, ungeachtet der bestimmten Gewichte und Konfigurationen der verschiedenen möglichen Lasten, **dadurch gekennzeichnet, dass**
- die begrenzte Anzahl von zulässigen Schlingeneinheitkombinationen Schlingeneinheiten mit mindestens zwei unterschiedlichen Schlingenbeinabmessungen (n, n+1, etc.) einschließt und umfasst:
- mindestens zwei zulässige Schlingeneinheitkombinationen mit der gleichen Anzahl von Schlingenbeinen (1-Bein, 2-Bein), aber unterschiedlichen Schlingenbeinabmessungen und im Wesentlichen unterschiedlichen Arbeitsbelastungsgrenzen (WLL), sodass eine Anpassung an einen breiten Bereich möglicher Arbeitsbelastungen möglich wird, und
- mindestens zwei zulässige Schlingeneinheitkombinationen mit im Wesentlichen der gleicher Arbeitsbelastungsgrenze (WLL), aber einer unterschiedlichen Anzahl von Schlingenbeinen (1-Bein, 2-Bein, 3-Bein, 4-Bein) und
unterschiedlichen Schlingenbeinabmessungen (n, n+1, etc.), um eine Anpassung an unterschiedliche Lasten ähnlichen Gewichts zu ermöglichen, die aber eine bestimmte Anzahl von Schlingenbeinen (1-Bein, 2-Bein, 3-Bein oder 4-Bein) erfordert.

2. Hubschlingensystem nach Anspruch 1, wobei alle zulässigen Schlingeneinheitkombinationen auf dem Informationsträger (32) angezeigt sind.

3. Hubschlingensystem nach Anspruch 1, wobei die mindestens zwei zulässigen Schlingeneinheitkombinationen, die eine im Wesentlichen gleiche Arbeitsbelastungsgrenze (WLL) aufweisen, Arbeitsbelastungsgrenzen haben, von denen eine höchstens 25% kleiner als die andere ist.

4. Hubschlingensystem nach Anspruch 1, wobei die begrenzte Anzahl von zulässigen Schlingeneinheitkombinationen Kombinationen mit insgesamt mindestens zwei und höchstens vier unterschiedlichen Schlingenabmessungen einschließt: n, n+1, n+2, n+3; mit mindestens einem und höchstens vier Schlingenbeinen in den zulässigen Schlingeneinheitkombinationen für die Abmessung n; mit möglicherweise null und höchstens vier Schlingenbeinen in den zulässigen Schlingeneinheitkombinationen für die Abmessung n+1; mit möglicherweise null und höchstens zwei Schlingenbeinen in den zulässigen Schlingeneinheitkombinationen für die Abmessung n+2, und mit möglicherweise null und höchstens einem Schlingenbein in den zulässigen Schlingeneinheitkombinationen für die Abmessung n+3.

5. Hubschlingensystem nach Anspruch 4, wobei die begrenzte Anzahl von zulässigen Schlingeneinheitkombinationen Kombinationen mit höchstens drei unterschiedlichen Schlingenabmessungen einschließt: n, n+1, n+2; mit höchstens vier Beinen in den zulässigen Schlingeneinheitkombinationen für die Abmessung n; mit höchstens drei Beinen in den zulässigen Schlingeneinheitkombinationen für die Abmessung n+1;
und mit möglicherweise einem Bein in den zulässigen Schlingeneinheitkombinationen für die Abmessung n+2.

6. Hubschlingensystem nach Anspruch 5, wobei die begrenzte Anzahl von zulässigen Schlingeneinheitkombinationen Kombinationen mit drei unterschiedlichen Schlingenabmessungen einschließt: n, n+1, n+2; mit einem, zwei, drei oder vier Schlingenbeinen in den zulässigen Schlingeneinheitkombinationen für die Abmessung n; mit höchstens einem oder zwei Beinen in den zulässigen Schlingeneinheitkombinationen für die Abmessung n+1; und mit einem Schlingenbein für die Abmessung n+2.

7. Hubschlingensystem nach Anspruch 1, wobei der Satz aus kombinierbaren Hubschlingeneinheiten mindestens eines von Folgendem einschließt:
- eine erste Anzahl von zweifachen Hubschlingeneinheiten (D), die jeweils aus vormontierten Elementen bestehen, die permanent miteinander verbunden sind, und
- eine zweite Anzahl von einfachen Hubschlingeneinheiten (S), die auch aus vormontierten Elementen bestehen, die permanent miteinander verbunden sind,
- wobei die zweifache und/oder einfache Hubschlingeneinheit schnell mit dem Hubhaken an der Hubstelle verbunden werden kann und
- wobei die zulässigen Schlingeneinheitkombinationen Schlingeneinheitkombinationen mit mindestens zwei und nicht mehr als vier unterschiedlichen Schlingenbeinabmessungen (n, n+1, n+2, n+3) einschließen,
- wobei die erste Anzahl von zweifachen Hubschlingeneinheiten (D) mit der gleichen Schlingenbeinabmessung nicht mehr als zwei und die zweite Anzahl von einfachen Hubschlingeneinheiten (S) mit der gleichen Schlingenbeinabmessung nicht mehr als vier beträgt.

8. Hubschlingensystem nach Anspruch 1, wobei der befestigte Informationsträger die zulässigen Schlingeneinheitkombinationen mit den verschiedenen Anzahlen von Schlingenbeinen, den verschiedenen Schlingenbeinabmessungen und den zugehörigen Arbeitsbelastungsgrenzen (WLL) anzeigt, gegebenenfalls auch für unterschiedliche Bewertungssysteme, welche die mindestens zwei zulässigen Schlingeneinheitkombinationen mit unterschiedlichen Arbeitsbelastungsgrenzen, aber der gleichen Anzahl von Schlingenbeinen sowie die mindestens zwei zulässigen Schlingeneinheitkombinationen mit unterschiedlichen Anzahlen von Schlingenbeinen, aber im Wesentlichen gleicher Arbeitsbelastungsgrenze, einschließen.

9. Hubschlingensystem nach Anspruch 8, wobei das Hubschlingensystem auch mindestens einen weiteren Informationsträger als freie Komponente einschließt, welche die gleichen Informationen enthält, wie die an einem Element befestigte, die einen Teil des Hubschlingensystems bildet.

## Revendications

1. Système d'élingue de levage pour connecter diverses charges à un crochet de levage (1) d'un appareil de levage, comprenant :
- un maillon de tête (30),
- un ensemble d'unités d'élingue de levage, constituées chacune d'un certain nombre de parties inséparables incluant un organe d'accouplement, destiné à être accouplé audit crochet de levage au moyen dudit maillon de tête (30), au moins une et au maximum deux branches d'élingue, et un connecteur à l'extrémité de chaque branche d'élingue, lesdites unités d'élingue de levage pouvant être combinées et étant prévues pour accoupler de manière sélective une charge particulière audit crochet de levage en fonction d'informations fournies sur un support d'informations (32) attaché au maillon de tête du système d'élingue de levage, un nombre limité de combinaisons permises pour les unités d'élingue existant, y compris une ou plusieurs unités d'élingue de levage ayant au total au moins une branche d'élingue et au maximum quatre branches d'élingue,
- la plage de charges et la capacité maximale de levage de l'appareil de levage pouvant être entièrement utilisées, indépendamment des poids particuliers et des configurations particulières des diverses charges possibles, **caractérisé en ce que**
- ledit nombre limité de combinaisons permises pour les unités d'élingue comporte des unités d'élingue ayant au moins deux dimensions de branches d'élingue différentes (n, n + 1, etc.) et comprend
- au moins deux combinaisons permises pour les unités d'élingue ayant le même nombre de branches d'élingue (1 branche, 2 branches) mais des dimensions de branches d'élingue différentes et des limites de charge de travail substantiellement différentes (WLL) de manière à permettre l'adaptation à une large plage de charges de travail possibles, et également
- au moins deux combinaisons permises pour les unités d'élingue, ayant substantiellement la même limite de charge de travail (WLL) mais des nombres différents de branches d'élingue (1 branche, 2 branches, 3 branches, 4 branches) et des dimensions de branches d'élingue différentes (n, n + 1, etc.), de manière à permettre l'adaptation à différentes charges de poids similaires mais nécessitant chacune un nombre spécifique de branches d'élingue (1 branche, 2 branches, 3 branches, ou 4 branches) .

2. Système d'élingue de levage selon la revendication 1, dans lequel toutes les combinaisons permises pour les unités d'élingue sont indiquées sur ledit support d'informations (32).

3. Système d'élingue de levage selon la revendication 1, dans lequel lesdites au moins deux combinaisons permises pour les unités d'élingue ayant substantiellement la même limite de charge de travail (WLL) ont des limites de charge de travail dont l'une est au maximum 25 % inférieure à l'autre.

4. Système d'élingue de levage selon la revendication 1, dans lequel ledit nombre limité de combinaisons permises pour les unités d'élingue comporte des combinaisons avec un total d'au moins deux et d'au plus quatre dimensions d'élingue différentes : n, n + 1, n + 2, n + 3 ; avec au moins une et au plus quatre branches dans les combinaisons permises pour les unités d'élingue pour la dimension n ; avec éventuellement zéro et au plus quatre branches d'élingue dans les combinaisons permises pour les unités d'élingue pour la dimension n + 1 ; avec éventuellement zéro et au plus deux branches d'élingue dans les combinaisons permises pour les unités d'élingue pour la dimension n + 2, et avec éventuellement zéro et au plus une branche d'élingue dans la combinaison permise pour les unités d'élingue pour la dimension n + 3.

5. Système d'élingue de levage selon la revendication 4, dans lequel ledit nombre limité de combinaisons permises pour les unités d'élingue comporte des combinaisons avec au maximum trois dimensions d'élingue différentes : n, n + 1, n + 2 ; avec au maximum quatre branches dans les combinaisons permises pour les unités d'élingue pour la dimension n ; avec au maximum trois branches dans les combinaisons permises pour les unités d'élingue pour la dimension n + 1 ; et avec éventuellement une branche pour la combinaison permise pour les unités d'élingue pour la dimension n + 2.

6. Système d'élingue de levage selon la revendication 5, dans lequel ledit nombre limité de combinaisons permises pour les unités d'élingue comporte des combinaisons avec trois dimensions d'élingue différentes : n, n + 1, n + 2 ; avec une, deux, trois ou quatre branches d'élingue dans les combinaisons permises pour les unités d'élingue pour la dimension n ; avec une ou deux branches d'élingue dans les combinaisons permises pour les unités d'élingue pour la dimension n + 1 ; et avec une branche d'élingue pour la dimension n + 2.

7. Système d'élingue de levage selon la revendication 1, dans lequel ledit ensemble d'unités d'élingue de levage pouvant être combinées comporte au moins l'un des éléments suivants :
- un premier nombre d'unités d'élingue de levage doubles (D) constituées chacune d'organes pré-assemblés connectés de manière permanente les uns aux autres, et
- un deuxième nombre d'unités d'élingue de levage simples (S) également constituées d'organes pré-assemblés connectés de manière permanente les uns aux autres,
- lesdites unités d'élingue de levage doubles et/ou simples pouvant être raccordées rapidement audit crochet de levage au niveau du site de levage, et
- lesdites combinaisons permises pour les unités d'élingue comportant des combinaisons pour les unités d'élingue ayant au moins deux et pas plus de quatre dimensions de branches d'élingue différentes (n, n + 1, n + 2, n + 3),
- ledit premier nombre d'unités d'élingue de levage doubles (D) avec la même dimension de branches d'élingue n'étant pas supérieur à deux et ledit deuxième nombre d'unités d'élingue de levage simples (S) avec la même dimension de branches d'élingue n'étant pas supérieur à quatre.

8. Système d'élingue de levage selon la revendication 1, dans lequel ledit support d'informations attaché indique lesdites combinaisons permises pour les unités d'élingue, avec les divers nombres de branches d'élingue, les diverses dimensions de branches d'élingue et les limites de charge de travail associées (WLL), éventuellement aussi pour différents systèmes de classement, y compris lesdites au moins deux combinaisons permises pour les unités d'élingue ayant des limites de charge de travail différentes mais le même nombre de branches d'élingue ainsi que lesdites au moins deux combinaisons permises pour les unités d'élingue ayant des nombres différents de branches d'élingue mais substantiellement la même limite de charge de travail.

9. Système d'élingue de levage selon la revendication 8, dans lequel le système d'élingue de levage comporte également au moins un support d'informations supplémentaire en tant que composant libre contenant les mêmes informations que celui qui est attaché à un organe faisant partie du système d'élingue de levage.
